# EUROPEAN PATENT APPLICATION

(11) **EP 4 848 737 A1**
(43) Date of publication of application: **02.12.2026**
(21) Application number: 24919942.3
(22) Date of filing: 13.12.2024
(51) Int. Cl.: H04N 21/44, H04N 21/472

(54) **MEDIA CONTENT GENERATION METHOD AND APPARATUS, AND MEDIUM AND ELECTRONIC DEVICE**

(30) Priority: 24.01.2024 CN 202410102988
(71) Applicant: Beijing Zitiao Network Technology Co., Ltd., Beijing 100190 (CN)
(72) Inventor: LI, Zhe, Beijing 100028 (CN); CHAI, Zhong, Beijing 100028 (CN); XIE, Boyang, Beijing 100028 (CN); ZHENG, Kexin, Beijing 100028 (CN); SUN, Yingzhao, Beijing 100028 (CN); WANG, Linpei, Beijing 100028 (CN); JIANG, Wei, Beijing 100028 (CN)
(74) Representative: Isarpatent
(86) International application number: PCT/CN2024/139080
(87) International publication number: WO 2025/156864

(57) **Abstract**

The present disclosure relates to the technical field of electronic information, and in particular relates to a media content generation method and apparatus, and a medium and an electronic device. The media content generation method comprises: in response to a trigger operation with regard to first target media content in a client, by means of the client, acquiring a template resource packet associated with the first target media content, and special-effect configuration data corresponding to a plurality of special effects; running the template resource packet in the client, and transmitting, by means of the client and to the template resource packet, the special-effect configuration data corresponding to the special effects, so as to execute a request for a server end by means of the template resource packet and on the basis of the special-effect configuration data corresponding to the special effects, and to generate a special-effect image based on each special effect; and in a media content editing interface of the client, displaying the special-effect image corresponding to each special effect.

## Description

The present application claims priority to Chinese Patent Application No. 202410102988.6, filed on January 24, 2024, which is incorporated herein by reference in its entirety as a part of the present application.

### TECHNICAL FIELD

Embodiments of the present disclosure relate to a media content generation method and apparatus, a medium, and an electronic device.

### BACKGROUND

In some platforms, users may be supported to generate their own media content based on effects that have been posted in the platforms. However, currently, in the creation of media content, each effect requires an independent resource package, which requires more storage resources. In addition, the launch, deployment, and maintenance of these effects require a large amount of human resources.

### SUMMARY

The present disclosure provides a media content generation method, including:

obtaining, in response to a trigger operation for first target media content in a client, template resource package and effect configuration data corresponding to multiple effects associated with the first target media content through the client;

running the template resource package in the client and transmitting the effect configuration data corresponding to each of the multiple effects to the template resource package through the client, to execute, through the template resource package, requests to a server according to the effect configuration data corresponding to each of the multiple effects, to generate effect images based on each of the multiple effects; and
displaying, in a media content editing interface of the client, the effect images respectively corresponding to each of the multiple effects.

The present disclosure provides a media content generation apparatus, including:
a first response module configured to obtain, in response to a trigger operation for first target media content in a client, template resource package and effect configuration data corresponding to multiple effects associated with the first target media content through the client;
a generation module configured to run the template resource package in the client and transmit the effect configuration data corresponding to each of the multiple effects to the template resource package through the client, to execute, through the template resource package, requests to a server according to the effect configuration data corresponding to each of the multiple effects, to generate effect images based on each of the multiple effects; and
a first display module configured to display, in a media content editing interface of the client, the effect images respectively corresponding to each of the multiple effects.

The present disclosure provides a computer-readable medium having a computer program stored thereon, where the program, when executed by a processing apparatus, implements the media content generation method described above.

The present disclosure provides an electronic device, including:
a storage apparatus having a computer program stored thereon; and
a processing apparatus configured to execute the computer program in the storage apparatus to implement the media content generation method described above.

### BRIEF DESCRIPTION OF DRAWINGS

The foregoing and other features, advantages, and aspects of embodiments of the present disclosure become more apparent with reference to the following specific implementations and in conjunction with the drawings. Throughout the drawings, the same or similar reference numerals denote the same or similar elements. It should be understood that the drawings are schematic and that parts and elements are not necessarily drawn to scale. In the drawings:
Fig. 1 is a flowchart of media content generation based on different effects according to the present disclosure;
Fig. 2 is a flowchart of a media content generation method according to an exemplary embodiment of the present disclosure;
Fig. 3 is another flowchart of a media content generation method according to an exemplary embodiment of the present disclosure;
Fig. 4 is a schematic interface diagram of a media content editing interface according to an exemplary embodiment of the present disclosure;
Fig. 5 is another flowchart of a media content generation method according to an exemplary embodiment of the present disclosure;
Fig. 6 is a block diagram of a media content generation apparatus according to an exemplary embodiment of the present disclosure; and
Fig. 7 is a schematic structural diagram of an electronic device according to an exemplary embodiment of the present disclosure.

### DETAILED DESCRIPTION

Embodiments of the present disclosure are described in more detail below with reference to the drawings. Although some embodiments of the present disclosure are shown in the drawings, it should be understood that the present disclosure may be implemented in various forms and should not be construed as limited to the embodiments set forth herein. Instead, these embodiments are provided for a more thorough and complete understanding of the present disclosure. It should be understood that the drawings and embodiments of the present disclosure are only for exemplary purposes and are not intended to limit the protection scope of the present disclosure.

It should be understood that steps described in method implementations of the present disclosure may be performed in different orders and/or in parallel. Furthermore, the method implementations may include additional steps and/or omit the steps shown. The scope of the present disclosure is not limited in this regard.

As used herein, the term "include/comprise" and its variations are open-ended inclusions, i.e., "include/comprise but not limited to". The term "based on" is "at least partially based on". The term "one embodiment" means "at least one embodiment". The term "another embodiment" means "at least one other embodiment". The term "some embodiments" means "at least some embodiments". Relevant definitions of other terms are given in the description below.

It should be noted that concepts such as "first" and "second" mentioned in the present disclosure are only used to distinguish between different apparatuses, modules, or units, and are not used to limit an order or interdependence of functions performed by these apparatuses, modules, or units.

It should be noted that modifiers of "one" and "multiple" mentioned in the present disclosure are exemplary rather than restrictive, and those skilled in the art should understand that they should be understood as "one or more" unless otherwise clearly indicated in the context.

The names of messages or information exchanged between multiple apparatuses in the implementations of the present disclosure are for illustrative purposes only, and are not intended to limit the scope of these messages or information.

It may be understood that before the use of the technical solutions disclosed in the embodiments of the present disclosure, the user should be informed of the type, range of use, use scenarios, etc. of personal information involved in the present disclosure and the authorization of the user should be obtained in an appropriate manner in accordance with relevant laws and regulations.

For example, in response to reception of an active request from a user, prompt information is sent to the user to clearly inform the user that the requested operation will require access to and use of personal information of the user. Thus, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to the reception of the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is only illustrative and does not limit the implementations of the present disclosure. Other manners that satisfy relevant laws and regulations may also be applied to the implementations of the present disclosure.

Meanwhile, it may be understood that data involved in the technical solution (including but not limited to the data itself, acquisition or use of the data) shall comply with requirements of corresponding laws, regulations, and related provisions.

In some platforms, users are supported to generate, based on effects posted in the platforms, media content that carries corresponding effects. For example, each effect corresponds to an independent resource compression package, for example, a compression package in ZIP format. The resource compression package includes some protocol files, media resources, script programs, etc., and by calling the script programs, interaction logic with a client and a server is implemented based on the protocol files and the media resources, thereby generating media content with corresponding effects.

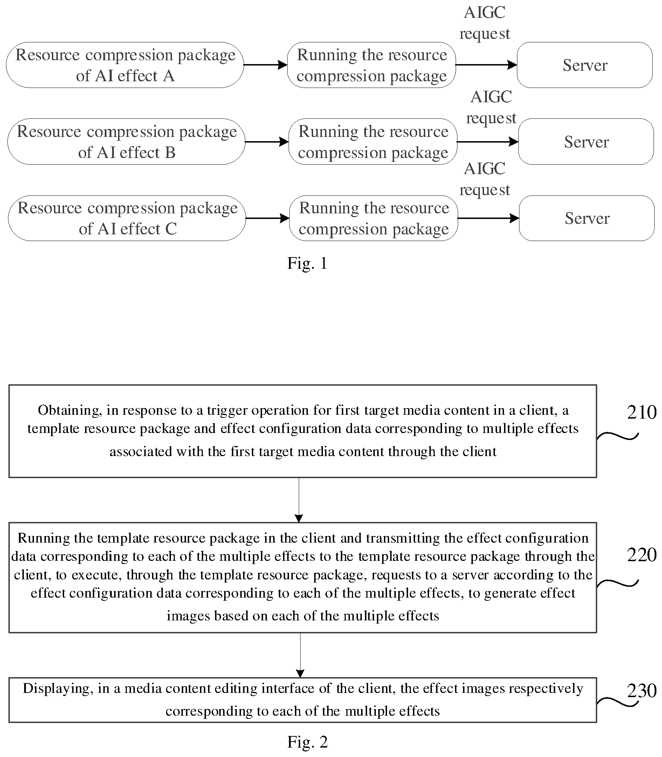

For example, taking the effect as an artificial intelligence (AI) effect for an example, Fig. 1 is a flowchart of media content generation based on different effects according to the present disclosure. In Fig. 1, different AI effects correspond to different resource compression packages. By running the resource compression packages corresponding to the different AI effects, corresponding AIGC (Artificial Intelligence Generated Content) requests are executed to the server, and then effect images corresponding to the AI effects are generated. In Fig. 1, interaction links of the AI effects are basically the same, and a main difference lies in different request bodies carried in requests to the server, that is, different AIGC requests are sent to the server, to obtain the effect images of the corresponding effects. However, currently, each AI effect corresponds to one resource compression package, which occupies a large amount of storage resources for a terminal used to store the resource compression packages. In addition, each AI effect needs to be launched, deployed, and maintained separately, which requires a large amount of human resources.

In view of this, embodiments of the present disclosure provide a media content generation method and apparatus, a medium, and an electronic device, to solve the problem that each effect corresponds to an independent resource package, which requires more storage resources and consumes more human resources.

Fig. 2 is a flowchart of a media content generation method according to an exemplary embodiment of the present disclosure. The method may be performed by a media content generation apparatus, where the apparatus may be implemented in software and/or hardware, and may be configured in an electronic device, typically in a mobile phone or a tablet computer. Referring to Fig. 2, the media content generation method may include the following steps.

Step 210: obtaining, in response to a trigger operation for first target media content in a client, a template resource package and effect configuration data corresponding to multiple effects associated with the first target media content through the client.

Step 220: running the template resource package in the client and transmitting the effect configuration data corresponding to each of the multiple effects to the template resource package through the client, to execute, through the template resource package, requests to a server according to the effect configuration data corresponding to each of the multiple effects, to generate effect images based on each of the multiple effects.

Step 230: displaying, in a media content editing interface of the client, the effect images respectively corresponding to each of the multiple effects.

In the present embodiment, the client may be understood as an application, and the client may be deployed in an electronic device.

In the present embodiment, the trigger operation for the first target media content may be triggered based on a click operation of a user. As an example, the first target media content may be presented in feed of the client, and the user performs the click operation on a control provided for creating the same AI effect for the presented first target media content, to implement the trigger operation for the first target media content.

In the present embodiment, the client may parse the first target media content to obtain a template resource package identification and an effect configuration parameter associated with the first target media content. The effect configuration parameter is a parameter used to request effect configuration, and the effect configuration parameter may be associated with effect configuration data of multiple effects. The effect configuration data may be pulled by the client from the server. The template resource package identification is used to identify a unique template resource package, and the template resource package may be downloaded by the client from the server.

As an example, the effect configuration data corresponding to the multiple effects associated with the effect configuration parameter may be configured by a developer through a configuration operation, that is, the developer configures the multiple effects shared by the same template resource package.

As an example, the effect configuration data may be represented by a file in JSON format.

In the present embodiment, the effect may be an AI effect, and the following uses the AI effect as an example for description. The AI effect may be used to perform image processing on a person image to obtain a stylized image.

It should be noted that the effect images respectively corresponding to each of the multiple effects may be media content obtained by superimposing an AI effect on original media resources. The original media resources may be image resources or video resources uploaded by a user or captured by a user. Exemplarily, before entering the media content editing interface, the client may respond to the trigger operation for the first target media content in the client, thereby entering a media resource acquisition interface, that is to say, the user may create media content using the same effect based on the first target media content with an effect posted by other users. The media resource acquisition interface may provide an entrance for shooting so that the user may obtain the original media resources by shooting online, and the media resource acquisition interface may also provide an entrance for browsing local resources so that the user may upload the original media resources by browsing the local resources of the electronic device. As an example, the original media resources may be the above-mentioned person images.

In the present embodiment, the multiple effects share the template resource package. The template resource package has complete effect codes and may run in the client. The template resource package is responsible for information exchange with each of the client and the server, to complete generation and posting of the effect image based on the effects, etc.

In the present embodiment, the request executed by the template resource package to the server is the above-mentioned AIGC request.

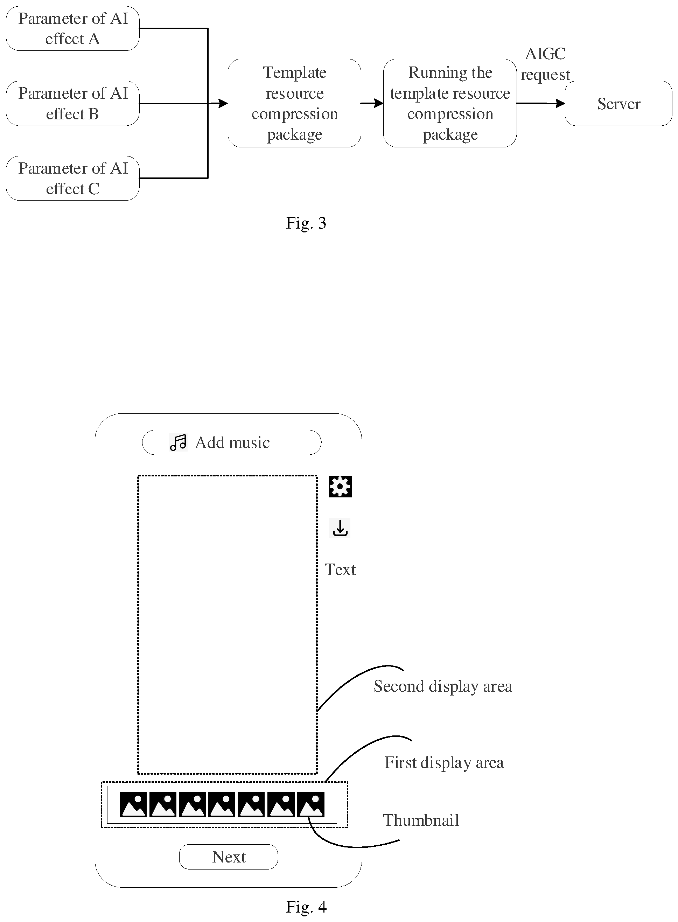

Fig. 3 is another flowchart of a media content generation method according to an exemplary embodiment of the present disclosure. Referring to Fig. 3, an AI effect A, an AI effect B, and an AI effect C are different AI effects, and the AI effect A, the AI effect B, and the AI effect C share a template resource compression package (that is, the template resource package). Parameters (that is, the effect configuration data) respectively corresponding to the AI effect A, the AI effect B, and the AI effect C are transmitted to the template resource compression package, and the template resource compression package is run. AIGC requests are made to the server according to the parameters respectively corresponding to the AI effect A, the AI effect B, and the AI effect C, to generate effect images respectively having the AI effect A, the AI effect B, and the AI effect C.

Through the above method, the multiple effects share the same template resource package, and by transmitting the effect configuration data of different effects to the template resource package, the template resource package executes requests for the corresponding effects to the server to generate the effect images corresponding to the corresponding effects, thereby realizing generation of differentiated effect images based on the same template resource package, reducing memory resource occupancy of the resource package, and simultaneously reducing human resource occupancy of the resource package.

In some embodiments, the media content editing interface may include a first display area, in which multiple slots may be displayed, and each slot corresponds to one effect. The step of displaying, in the media content editing interface of the client, the effect images respectively corresponding to each of the multiple effects may be implemented in the following manner: displaying, in the slots displayed in the media content editing interface, a first effect image of an effect corresponding to the slots, where the first effect image includes a thumbnail.

The thumbnail is a small image obtained by compressing a picture. Fig. 4 is a schematic interface diagram of a media content editing interface according to an exemplary embodiment of the present disclosure. In Fig. 4, multiple slots are displayed in the first display area, and each slot corresponds to one effect. The first display area may support the user to perform a sliding operation for switching a currently selected slot.

Through the above method, requests are sent to the server based on the template resource package to generate thumbnails based on different effects, so that the thumbnails generated based on the different effects may be displayed in the corresponding slots to present the effect images of the different effects to the user.

In some embodiments, the media content editing interface may further include a second display area, and the step of displaying, in the media content editing interface of the client, the effect images respectively corresponding to each of the multiple effects may further include: displaying, in the second display area, a second effect image of an effect corresponding to a currently selected slot, where the first effect image is an effect image obtained by compressing the corresponding second effect image.

Continuing to refer to Fig. 4, the area of the second display area is larger than that of the first display area, and the second display area is used to display the second effect image of the effect corresponding to the currently selected slot. As an example, the first effect image may be an effect image obtained by compressing the size of the second effect image.

It should be noted that before the user has not performed the slot switching operation, the currently selected slot is a slot corresponding to the effect used for the first target media content. It may be learned from the above contents that the first display area may support the user to perform the sliding operation for switching the currently selected slot, and both the first effect image and the second effect image corresponding to the currently selected slot are highlighted. For example, an effect label is displayed above the first effect image, and the second effect image corresponding to the first effect image is displayed in the second display area. For the effect label, reference may be made to the following related embodiments, which will not be repeated in the present embodiment.

Through the above method, the uncompressed media content with the effect is presented in the second display area, so that it is convenient for the user to preview the effect image with richer image content.

In other embodiments, the media content generation method may further include: updating and displaying, in response to a slot switching operation for the media content editing interface, the first effect image of the effect corresponding to the slot displayed in the media content editing interface and the second effect image of the effect corresponding to the currently selected slot.

It may be learned from the above contents that the first display area may support the user to perform the sliding operation for switching the currently selected slot, and therefore, the slot displayed in the media content editing interface is also updated accordingly.

Further, in response to the slot switching operation for the media content editing interface, the client may update and display the first effect image of the effect corresponding to the slot displayed in the media content editing interface and the second effect image of the effect corresponding to the currently selected slot.

In some embodiments, the media content generation method may further include: displaying, in the media content editing interface, an effect label of the effect corresponding to the currently selected slot.

The effect configuration data may include the effect label, and the effect label is used to describe the style of the corresponding effect, such as a realistic style and a cartoon style, etc. As an example, the effect label of the effect may be displayed above the currently selected slot.

Through the above method, the effect label corresponding to the currently selected slot may be displayed in the media content editing interface, so that it is convenient for the user to know the effect style of the effect applied to the original media resources.

In some embodiments, the media content generation method may further include: posting, in response to a posting operation for second target media content in the media content editing interface, the second target media content carrying an anchor to the feed of the client.

It should be noted that based on the feed of the client, the user may browse media content created by other users or the user themselves, and the media content here may include media content created by other users using the effect corresponding to the second target media content.

The anchor is used to link to an effect detail page, and the effect detail page may include media content generated based on the effect corresponding to the second target media content. The media content here may include content created by other users using the effect corresponding to the second target media content.

The second target media content includes a second effect image. As another example, the second target media content may include not only the second effect image, but also other content such as audio, stickers, and subtitles. The user may edit the audio, stickers, subtitles, etc. through an editing entrance provided in the media content editing interface. For example, referring to Fig. 4, the user may add corresponding audio to the second effect image through a control for adding music.

In other embodiments, the effect detail page may further include an entrance that supports the user to trigger a posting operation. Continuing to refer to Fig. 4, the user may click a "Next" button shown in Fig. 4 to trigger the posting operation. At the time of posting, the user may select a tag description corresponding to the anchor based on the client, and the corresponding tag description is presented while the first media content is presented in the feed. On this basis, the user may click the tag description to achieve the purpose of linking to the effect detail page.

Through the above method, quick browsing of the media content with the effect is realized based on the anchor.

In some embodiments, the media content generation method may further include: displaying, in response to the client receiving a message indicating a generation failure, a prompt message for re-generating the effect image in the media content editing interface.

The message indicating a generation failure may be sent by the template resource package to the client, and the message indicating the generation failure may be sent by the server to the template resource package. That is, there is a case that rendering or generation of the first effect image or the second effect image fails. In this case, the server will send a notification message to the template resource package to inform the template resource package that the generation or rendering of the effect image fails, and then the template resource package may transmit the message indicating the generation failure to the client to inform the client that the generation or rendering of the effect image fails.

The prompt message may be used to trigger the template resource package to re-execute the AIGC request. As an example, the user may click the prompt message based on the client to trigger the template resource package to re-execute the AIGC request to re-generate and re-render the first effect image or the second effect image, and to realize display of the first effect image or the second effect image in the client.

Through the above method, using the prompt message, it may be convenient for the user to re-trigger the process of generating or rendering the corresponding effect image.

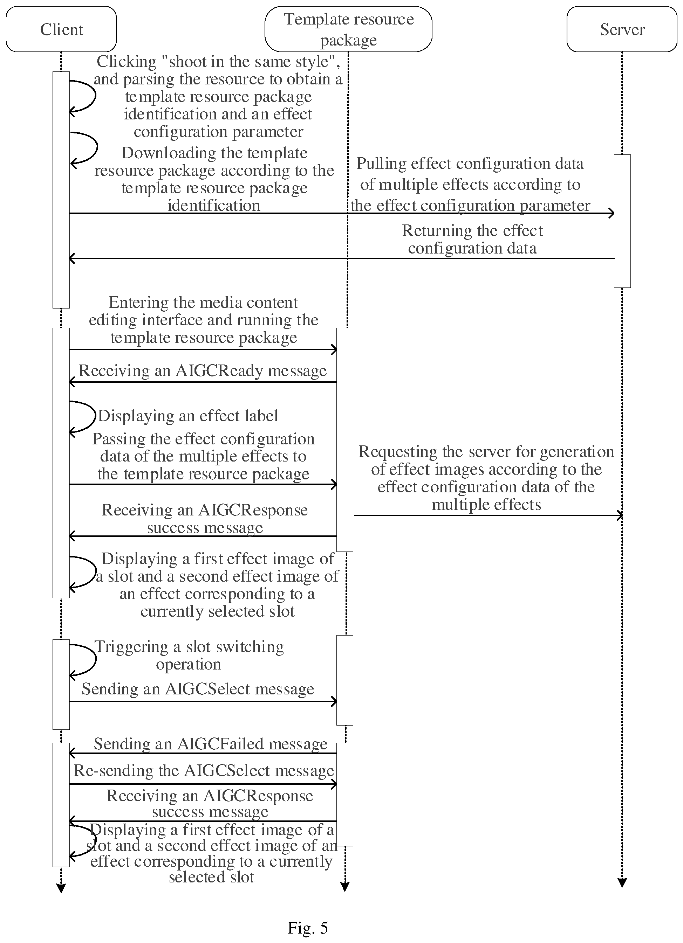

Fig. 5 is another flowchart of a media content generation method according to an exemplary embodiment of the present disclosure. Referring to Fig. 5, the user clicks "shoot in the same style" displayed by a client through the client, and the client parses a resource clicked by the user to obtain a template resource package identification and an effect configuration parameter. The client downloads a template resource package from a server according to the template resource package identification. The client pulls effect configuration data of multiple effects from the server according to the effect configuration parameter, and the server returns the effect configuration data of the multiple effects to the client. After receiving the effect configuration data of the multiple effects, the client may enter a media content editing interface and run the template resource package. After receiving an AIGCReady message sent by the template resource package, the client may display an effect label based on the effect configuration data, and the client may transmit the effect configuration data of the multiple effects to the template resource package, so as to request, through the template resource package, the server for generation of effect images according to the effect configuration data of the multiple effects. The client receives an AIGCResponse success message sent by the template resource package, so that a first effect image of an effect corresponding to a slot displayed in the media content editing interface and a second effect image of an effect corresponding to a currently selected slot may be displayed.

The user may switch the currently selected slot based on triggering of a slot switching operation in the media content editing interface, and the client sends an AIGCSelect message to the template resource package to notify the template resource package to render the second effect image obtained based on the effect corresponding to the slot selected by the user. If the rendering by the template resource package fails, an AIGCFailed message (that is, a message indicating a generation failure) may be sent to the client, and the client may display prompt information to prompt the user to re-trigger the template resource package to re-execute the request to re-render the second effect image. After re-rendering is successful, the AIGCResponse success message is sent to the client, and the client may update the first effect image of the displayed slot and the second effect image of the effect corresponding to the currently selected slot.

Through the above method, the AI effect is abstracted into a template resource package that may accept parameter configuration, and effect parameters of different effects are transmitted to the template resource package, so as to achieve generation of effect images of different effects using the same template resource package.

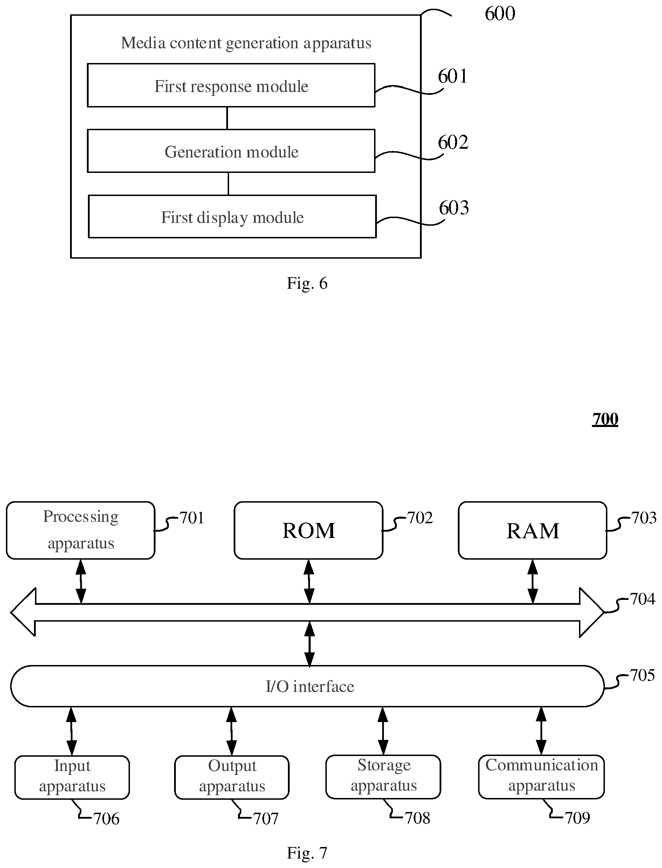

Fig. 6 is a block diagram of a media content generation apparatus according to an exemplary embodiment of the present disclosure. Referring to Fig. 6, the media content generation apparatus 600 includes:
a first response module 601 configured to obtain, in response to a trigger operation for first target media content in a client, a template resource package and effect configuration data corresponding to multiple effects associated with the first target media content through the client;
a generation module 602 configured to run the template resource package in the client and transmit the effect configuration data corresponding to each of the multiple effects to the template resource package through the client, to execute, through the template resource package, requests to a server according to the effect configuration data corresponding to each of the multiple effects, to generate effect images based on each of the multiple effects; and
a first display module 603 configured to display, in a media content editing interface of the client, the effect images respectively corresponding to each of the multiple effects.

Optionally, the media content editing interface includes a first display area, the first display area includes multiple slots, each slot corresponds to one effect, and the first display module 603 is further configured to:
display, in the slots displayed in the media content editing interface, a first effect image of an effect corresponding to the slots, where the first effect image includes a thumbnail.

Optionally, the media content editing interface further includes a second display area, and the first display module 603 is further configured to:
display, in the second display area, a second effect image of an effect corresponding to a currently selected slot, where the first effect image is obtained by compressing the second effect image.

Optionally, the media content generation apparatus 600 further includes:
a second display module configured to display, in the media content editing interface, an effect label of the effect corresponding to the currently selected slot.

Optionally, the media content generation apparatus 600 further includes:
a second response module configured to update and display, in response to a slot switching operation for the media content editing interface, the first effect image of the effect corresponding to the slot displayed in the media content editing interface and the second effect image of the effect corresponding to the currently selected slot.

Optionally, the media content generation apparatus 600 further includes:
a third response module configured to post, in response to a posting operation for second target media content in the media content editing interface, the second target media content carrying an anchor to feed of the client;
the second target media content includes a second effect image, the anchor is used to link to an effect detail page, and the effect detail page includes media content generated based on an effect corresponding to the second target media content.

Optionally, the media content generation apparatus 600 further includes:
a fourth response module configured to display, in response to the client receiving a message indicating a generation failure, a prompt message for re-generating the effect image in the media content editing interface.

For the specific implementation of each module in the media content generation apparatus 600, reference may be made to the above-mentioned related embodiments, which will not be repeated in the present embodiment.

Based on the same concept, an embodiment of the present disclosure further provides a computer-readable medium having a computer program stored thereon, where the program, when executed by a processing apparatus, implements the steps of the above-mentioned media content generation method.

Based on the same concept, an embodiment of the present disclosure further provides an electronic device, including:
a storage apparatus having a computer program stored thereon; and
a processing apparatus configured to execute the computer program in the storage apparatus to implement the steps of the above-mentioned media content generation method.

Reference is made to Fig. 7 below, which illustrates a schematic structural diagram of an electronic device 700 suitable for implementing the embodiments of the present disclosure. The terminal device in the embodiments of the present disclosure may include, but is not limited to, mobile terminals such as mobile phones, notebook computers, digital broadcast receivers, PDAs (personal digital assistants), tablet computers, PMPs (portable multimedia players), in-vehicle terminals (for example, in-vehicle navigation terminals), etc., and stationary terminals such as digital TVs, desktop computers, etc. The electronic device shown in Fig. 7 is only an example, and should not impose any limitation on the function and scope of use of the embodiments of the present disclosure.

As shown in Fig. 7, the electronic device 700 may include a processing apparatus (e.g., a central processing unit, a graphics processor, etc.) 701 that may perform various appropriate actions and processing in accordance with a program stored in a read-only memory (ROM) 702 or a program loaded from a storage apparatus 708 into a random access memory (RAM) 703. The RAM 703 further stores various programs and data required for operations of the electronic device 700. The processing apparatus 701, the ROM 702, and the RAM 703 are interconnected by means of a bus 704. An input/output (I/O) interface 705 is also connected to the bus 704.

Usually, the following apparatuses may be connected to the I/O interface 705: an input apparatus 706 including, for example, a touch screen, a touchpad, a keyboard, a mouse, a camera, a microphone, an accelerometer, a gyroscope, etc.; an output apparatus 707 including, for example, a liquid crystal display (LCD), a speaker, a vibrator, etc.; a storage apparatus 708 including, for example, a magnetic tape, a hard disk, etc.; and a communication apparatus 709. The communication apparatus 709 may allow the electronic device 700 to communicate wirelessly or wiredly with other devices to exchange data. While Fig. 7 shows the electronic device 700 with various apparatuses, it should be understood that not all of the illustrated apparatuses are necessarily implemented or included. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product including a computer program carried on a non-transitory computer-readable medium, the computer program containing program code for performing the method shown in the flowchart. In such an embodiment, the computer program may be downloaded and installed from a network via the communication apparatus 709, or installed from the storage apparatus 708, or installed from the ROM 702. When the computer program is executed by the processing apparatus 701, the above-mentioned functions defined in the method of the embodiments of the present disclosure are executed.

It should be noted that the above-mentioned computer-readable medium in the present disclosure may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus, device, or any combination thereof. More specific examples of the computer-readable storage medium may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program that may be used by or in combination with an instruction execution system, apparatus, or device. In the present disclosure, the computer-readable signal medium may include a data signal propagated in a baseband or as part of a carrier wave, and computer-readable program code is carried therein. The data signal propagated in this manner may take many forms, including but not limited to electromagnetic signals, optical signals, or any suitable combination thereof. The computer-readable signal medium may also be any computer-readable medium other than the computer-readable storage medium, and the computer-readable signal medium may send, propagate, or transmit the program used by or in combination with the instruction execution system, apparatus, or device. The program code contained on the computer-readable medium may be transmitted in any suitable medium, including but not limited to wire, optical cable, RF (radio frequency), etc., or any suitable combination thereof.

In some implementations, the electronic device may communicate using any currently known or future developed network protocol, such as the HTTP (HyperText Transfer Protocol), and may be interconnected with any form or medium of digital data communication (e.g., a communication network). Examples of communication networks include a local area network ("LAN"), a wide area network ("WAN"), an internet (e.g., the Internet), a peer-to-peer network (e.g., an Ad Hoc network), and any network currently known or to be developed in the future.

The above computer-readable medium may be included in the above electronic device, or may exist alone without being assembled into the electronic device.

The above computer-readable medium carries one or more programs that, when executed by the electronic device, cause the electronic device to: obtain, in response to a trigger operation for first target media content in a client, a template resource package and effect configuration data corresponding to multiple effects associated with the first target media content through the client; run the template resource package in the client and transmit the effect configuration data corresponding to each of the multiple effects to the template resource package through the client, to execute, through the template resource package, requests to a server according to the effect configuration data corresponding to each of the multiple effects, to generate effect images based on each of the multiple effects; and display, in a media content editing interface of the client, the effect images respectively corresponding to each of the multiple effects.

The computer program code for performing the operations of the present disclosure may be written in one or more programming languages or a combination thereof, the above programming languages including but not limited to object-oriented programming languages such as Java, Smalltalk, C++, as well as conventional procedural programming languages such as "C" language or similar programming languages. The program code may be executed entirely on a user computer, partly on the user computer, as a stand-alone software package, partly on the user computer and partly on a remote computer, or entirely on the remote computer or a server. In the case of the remote computer, the remote computer may be connected to the user computer through any kind of network, including a local area network (LAN) or a wide area network (WAN), or it may be connected to an external computer (for example, via the Internet using an Internet service provider).

The flowcharts and block diagrams in the drawings illustrate the possibly implemented architectures, functions, and operations of the system, method, and computer program product according to various embodiments of the present disclosure. In this regard, each block in the flowchart or block diagram may represent a module, program segment, or part of code that contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules involved in the embodiments described in the present disclosure may be implemented in software or hardware. The name of a module does not constitute a limitation on the module itself under certain circumstances.

The functions described above herein may be at least partially performed by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logic device (CPLD), etc.

In the context of the present disclosure, the machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electrical, magnetic, optical, electromagnetic, infrared, or semiconductor system, apparatus, or device, or any suitable combination of the above. More specific examples of the machine-readable storage medium would include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

The above description is only a preferred embodiment of the present disclosure and an illustration of the technical principles employed. Those skilled in the art should understand that the disclosure scope involved in the present disclosure is not limited to the technical solutions formed by the specific combination of the above technical features, and should also cover other technical solutions formed by any combination of the above technical features or their equivalent features without departing from the above disclosure concept. For example, a technical solution formed by replacing the above features with technical features with similar functions disclosed in the present disclosure (but not limited to).

Additionally, although operations are depicted in a particular order, this should not be understood as requiring that such operations should be performed in the shown particular order or in a sequential order. Under certain circumstances, multitasking and parallel processing may be advantageous. Likewise, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combinations.

Although the subject matter has been described in language specific to structural features and/or logical actions of the method, it should be understood that the subject matter defined in the appended claims is not necessarily limited to the specific features or actions described above. Conversely, the specific features and actions described above are merely exemplary forms for implementing the claims. Regarding the apparatuses in the above embodiments, the specific manner in which each module performs operations has been described in detail in the method embodiments, and will not be detailed herein.

## Claims

1. A media content generation method, comprising:
obtaining, in response to a trigger operation for first target media content in a client, a template resource package and effect configuration data corresponding to multiple effects associated with the first target media content through the client;
running the template resource package in the client and transmitting the effect configuration data corresponding to each of the multiple effects to the template resource package through the client, to execute, through the template resource package, requests to a server according to the effect configuration data corresponding to each of the multiple effects, to generate effect images based on each of the multiple effects; and
displaying, in a media content editing interface of the client, the effect images respectively corresponding to each of the multiple effects.

2. The method of claim 1, wherein the media content editing interface comprises a first display area, the first display area comprises multiple slots, each slot corresponds to an effect, and the displaying, in a media content editing interface of the client, the effect images respectively corresponding to each of the multiple effects comprises:
displaying, in a slot displayed in the media content editing interface, a first effect image of an effect corresponding to the slot, wherein the first effect image comprises a thumbnail.

3. The method of claim 2, wherein the media content editing interface further comprises a second display area, and the displaying, in a media content editing interface of the client, the effect images respectively corresponding to each of the multiple effects, further comprises:
displaying, in the second display area, a second effect image of an effect corresponding to a currently selected slot, wherein the first effect image is obtained by compressing the second effect image.

4. The method of claim 3, further comprising:
displaying, in the media content editing interface, an effect label of the effect corresponding to the currently selected slot.

5. The method of claim 3, further comprising:
updating and displaying, in response to a slot switching operation for the media content editing interface, the first effect image of the effect corresponding to the slot displayed in the media content editing interface and the second effect image of the effect corresponding to the currently selected slot.

6. The method of claim 3, further comprising:
posting, in response to a posting operation for second target media content in the media content editing interface, the second target media content carrying an anchor to feed of the client,
wherein the second target media content comprises the second effect image, the anchor is used to link to an effect detail page, and the effect detail page comprises media content generated based on an effect corresponding to the second target media content.

7. The method of claim 1, further comprising:
displaying, in response to the client receiving a message indicating a generation failure, a prompt message for re-generating the effect images in the media content editing interface.

8. A media content generation apparatus, comprising:
a first response module, configured to obtain, in response to a trigger operation for first target media content in a client, a template resource package and effect configuration data corresponding to multiple effects associated with the first target media content through the client;
a generation module, configured to run the template resource package in the client and transmit the effect configuration data corresponding to each of the multiple effects to the template resource package through the client, to execute, through the template resource package, requests to a server according to the effect configuration data corresponding to each of the multiple effects, to generate effect images based on each of the multiple effects; and
a first display module, configured to display, in a media content editing interface of the client, the effect images respectively corresponding to each of the multiple effects.

9. A computer-readable medium having a computer program stored thereon, wherein the program, when executed by a processing apparatus, implements the method of any of claims 1 to 7.

10. An electronic device, comprising:
a storage apparatus having a computer program stored thereon; and
a processing apparatus configured to execute the computer program in the storage apparatus to implement the method of any of claims 1 to 7.
